# EUROPEAN PATENT APPLICATION

(11) **EP 4 325 941 A1**
(43) Date of publication of application: **21.02.2024**
(21) Application number: 22190997.1
(22) Date of filing: 18.08.2022
(51) Int. Cl.: H04W 48/16, H04W 48/14, H04W 84/12

(54) **METHOD FOR DISCOVERING ACCESS POINTS IN AN INDUSTRIAL FACILITY**

(71) Applicant: Siemens Aktiengesellschaft, 80333 München (DE)
(72) Inventor: Shanmugam, Ashokkumar, 76149 Karlsruhe (DE)
(74) Representative: Siemens Patent Attorneys

(57) **Abstract**

The current disclosure describes a method for discovering two or more access points in an industrial facility. The method comprises receiving a plurality of single user probe responses from the two or more access points over the two or more resource units of the frequency band associated with access point discovery, wherein each single user probe response is received over the resource unit associated with the corresponding access point; and discovering the two or more access points based on the received plurality of single user probe responses from the two or more access points, wherein each access point from the two or more access points is associated with a corresponding resource unit from the two or more resource units and wherein each resource unit is associated with one or more sub carriers in the frequency band.

## Description

### Background:

The current disclosure relates to wireless networks and more particularly to discovery of access points. Conventionally, wireless clients connect to access points after scanning and discovering access points within the radio proximity of the wireless clients. To discover access points, wireless clients scan a plurality of channels and listen for beacons on the channels from the access points. Often, such scanning of channels takes substantial time as the client switches to each channel to listen for beacons, significantly impacting real time communications.

### Description:

The current disclosure relates to wireless networks in industrial automation environments. As mentioned above, wireless client used in industrial environments may discover access points within the radio proximity of the wireless client by scanning a plurality of channels. Often, there may be a plurality of channels which may be used in the industrial automation environments and accordingly such scans can often take substantial time and accordingly this can act as a severe impediment in realizing real time communication within industrial automation environments. Accordingly, there is a need for a method and a device which addresses the issue of discovery of access points.

Accordingly, the current disclosure describes a method for discovering two or more access points in an industrial facility. The method comprises receiving a plurality of single user probe responses from the two or more access points over the two or more resource units of the frequency band associated with access point discovery, wherein each single user probe response is received over the resource unit associated with the corresponding access point; and discovering the two or more access points based on the received plurality of single user probe responses from the two or more access points, wherein each access point from the two or more access points is associated with a corresponding resource unit from the two or more resource units and wherein each resource unit is associated with one or more sub carriers in the frequency band.

Accordingly, the current disclosure describes a method for faster scan and discovery of access points by the client device. The client device is able to receive single user probe responses from the two or more access points over the same frequency band. Accordingly, by using resource units, the client device is able to discover a plurality of access points by only having to scan a single frequency band and therefore the scan and discovery time is substantially reduced. This can result in significant improvement in communication latency in industrial environments.

In an embodiment, the method further comprises transmitting a multi-user probe request to the two or more access points. By using a multi user probe request, the client device is able to contact a plurality of access points over a single frequency band. Accordingly, the client device may actively seek out access points without sending multiple requests over plurality of frequency bands. By using a multi user probe request, which is transmitted to the plurality of access points over the resource units, client device is able contact the access points without significant latency. In an embodiment, each access point from the two or more access points is connected to an industrial network, the industrial network comprising a network management device for configuring with the two or more access points. Accordingly, the network management device may be used to assign the access points against the resource points of the frequency band. In an embodiment, the two or more resource units includes a sequence of resource units. Accordingly, the access points are assigned against the sequence of resource units and accordingly, the client device may discover the access points by scanning the sequence of resource units.

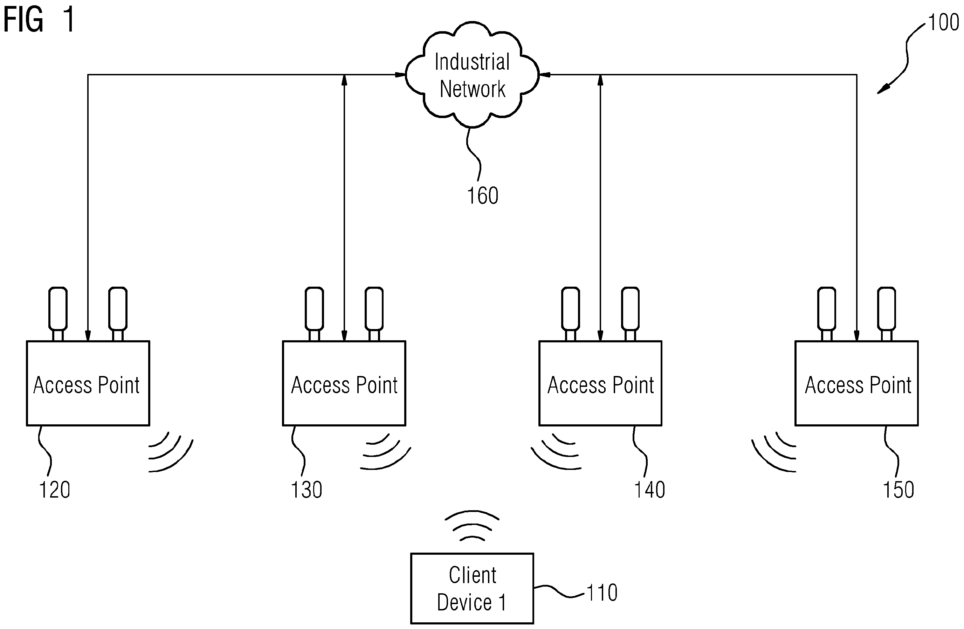

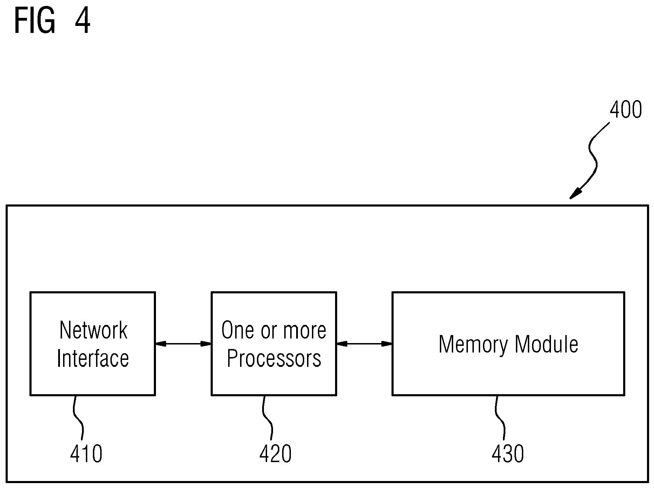

In another aspect, the current disclosure describes a client device configured to discover two or more access points in an industrial facility. The client device comprises one or more network interfaces configured to connect to the two or more access points and one or more processors connected to the one or more network interfaces. The one or more processors configured to receive a plurality of single user probe responses from the two or more access points over the two or more resource units of the frequency band associated with access point discovery, wherein each single user probe response is received over the resource unit associated with the corresponding access point; and discover the two or more access points based on the received plurality of single user probe responses from the two or more access points, wherein each access point from the two or more access points is associated with a corresponding resource unit from the two or more resource units and wherein each resource unit is associated with one or more sub carriers in the frequency band. In yet another aspect, the current disclosure describes a non transitory storage medium comprising a plurality of instructions, which when executed on one or more processors, cause the one or more processors to receive a plurality of single user probe responses from the two or more access points over the two or more resource units of the frequency band associated with access point discovery, wherein each single user probe response is received over the resource unit associated with the corresponding access point; and discover the two or more access points based on the received plurality of single user probe responses from the two or more access points, wherein each access point from the two or more access points is associated with a corresponding resource unit from the two or more resource units and wherein each resource unit is associated with one or more sub carriers in the frequency band. The advantages of the method are applicable to the device and the non transitory storage medium. These aspects are further explained in reference to figures 1-4.
Figure 1 illustrates a section of an industrial facility including a client device and a plurality of access points;
Figure 2 illustrates a method for discovering two or more access points in an industrial facility;
Figure 3 illustrates a frequency band comprising a plurality of resource units associated with the plurality of access points; and
Figure 4 illustrates a client device configured to discover two or more access points in an industrial facility.

Figure 1illustrates a section 100 of an industrial facility including a client device 110 and a plurality of access points (120, 130, 140 and 150). Industrial facility herein refers to any environment where one or more industrial processes such as manufacturing, refining, smelting, assembly of equipment may take place and includes process plants, oil refineries, automobile factories, etc. The industrial facility may comprise a plurality of control devices connected to a plurality of field devices for monitoring and regulating one or more industrial processes in the industrial facility. Further industrial facility includes an industrial network for connecting the various devices in the industrial facility. Industrial network herein refers to any electronic data network and accordingly includes office campus networks, industrial automation networks, private radio networks, and any other high availability networks.

The section 100 comprises a client device 110 associated with an industrial process in the industrial process. In an example, the client device 110 is a controller for controlling one or more actuators using input from one or more sensors deployed in the industrial facility. In another example, the client device 110 is a gateway device or an edge device responsible for collecting process data from one or more industrial devices and transmitting the collected process data to the cloud. Accordingly, packets associated with the client device 110 include payloads associated with a process in the industrial facility (also referred to as industrial plant).

The client device 110 is configured to connect to the industrial network via a wireless sub network, which includes the plurality of access points (120, 130, 140 and 150). The plurality of access points are responsible for connecting a plurality of client devices to the wireless sub network. Accordingly, when the client device 110 is deployed in the industrial facility, the client device 110 attempts to connect to an access point for communicating with the other devices in the industrial facility. Accordingly, to connect to the wireless subnetwork, the client device 110 discovers the access points.

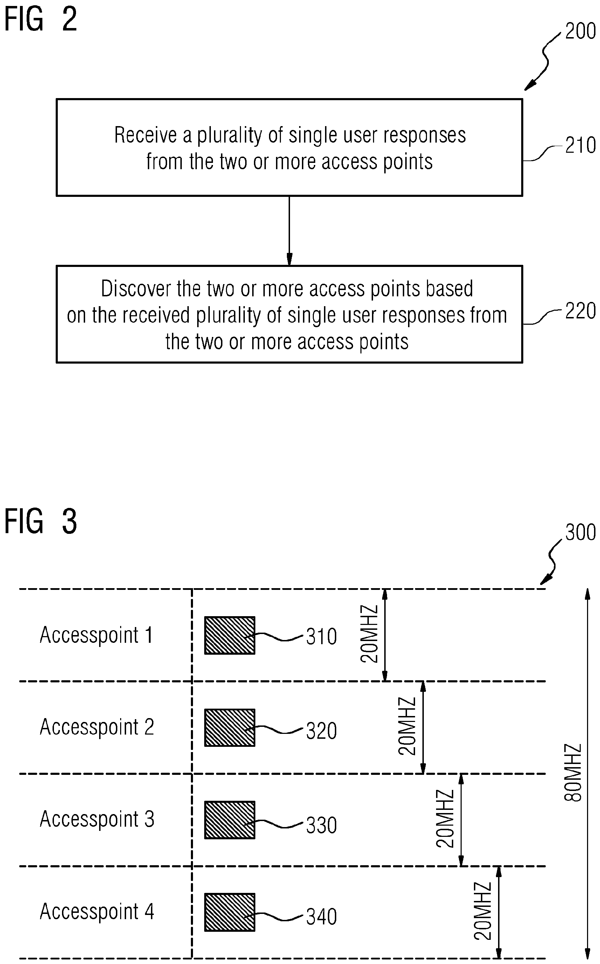

In order improve efficiency of discovery, the client device 110 is configured to scan a plurality of resource units of a frequency band or channel to discover a plurality of access units (120, 130, 140 and 150). Accordingly, the client device and the access points are capable of implementing orthogonal frequency division multiple access techniques, allowing for multiple access using the resource units. This is further explained in reference to figure 2.

Figure 2 illustrates a method 200 for discovering two or more access points (120, 130, 140, 150) in the industrial facility. The method 200 is realized by the client device 110.

At step 210, the client device 120 receives a plurality of single user probe responses from the two or more access points (120, 130, 140, 150) over the two or more resource units of the frequency band associated with access point discovery. Resource unit herein refers to a sub carrier within a frequency band or channel associated with access point discovery. Each access point from the two or more access points (120, 130, 140, 150) is associated with a corresponding resource unit from the two or more resource units. Accordingly, the access points are assigned to the plurality of resource units.

In an embodiment, the method 200 is a passive discovery method and therefore, the client device scans the resource units without sending any probes. Each access point is configured to transmit beacons advertising their presence periodically on the corresponding resource unit to announce its presence to any new client devices. The client device 120 is configured to listen to the beacons on the resource units for a predefined time period. Then, the client device 120 transmits a multi-user probe request on the resource units on which the client device 120 receives a beacon. In another embodiment, the method 200 is an active discovery method and accordingly, the method 200 further comprises transmitting a multi-user probe request to the two or more access points (120, 130, 140, 150) on the resource units (without listening for beacons).

The client device 120 transmits the multi-user probe request to the access points over the resource units. The multi-user probe request is a multi-user frame which is transmitted or broadcasted on the all the resource units of the frequency band. The multi-user probe request is transmitted by the client device to discover the access points.

The client device 120 receives the plurality of single user probe responses from the access points (120, 130, 140 and 150) on the resource units. This is further illustrated in relation to figure 3.

Figure 3 illustrates a frequency band 300 comprising a plurality of resource units associated with the plurality of access points. The frequency band is of 80Mhz and is composed of four resource units, each resource unit of 20 Mhz. Additionally, each resource unit is assigned against a corresponding access unit. As mentioned above, each access unit is configured to transmit single user probe response (shown in the figure as responses 310, 320, 330 and 340) periodically on the corresponding resource unit. The access points utilize uplink OFDMA, thereby allowing for the access points to simultaneously transmit the single user probe responses to the client device 110 over the resource units. The client device 120 scans the frequency band of 80Mhz and accordingly, receives the single user responses from the access points on the resource units.

Then, at step 220, the client device 120 discovers the two or more access points (120, 130, 140, 150) based on the received plurality of single user probe responses from the two or more access points (120, 130, 140, 150). Each single user probe response from a corresponding access point comprises network parameters associated with the corresponding access points. Accordingly, based on the single user probe response, the client device receives network information (i.e. network parameters) of the plurality of access points. Then the client device 120 is configured to connect to an access point from the plurality of access points based on the network information associated with the corresponding access point.

In an embodiment, the multi-user probe request is configured to act as a synchronization signal or a trigger frame between the access points to ensure that the access points transmit the single user probe responses at the appropriate time instances. For example, the access points are configured to transmit the single user responses within a predefined time period from the transmission of the multi-user probe request. The client device 110 is configured to wait for the predefined time period for the single user responses.

In an embodiment, the two or more resource units includes a sequence of resource units. Accordingly, each access point is assigned to a corresponding resource unit from the sequence of resource units. This allows for the client device to quickly discover the access points. In an embodiment, each access point from the two or more access points is connected to a network management device. The network management device is for configuring with the two or more access points. For example, the network management device is configured to assign the access points to the resource units.

Accordingly, the current disclosure addresses the issue of access point discovery, by utilizing resource units to ensure that client device can discover all the access points simultaneously by scanning a single frequency band or channel. This allows for faster discovery and quick establishment of connection between the client device and the access point.

It may be noted that while the above mentioned method is explained in reference to the client 110, the above method may be realized using one or more devices or via one or more software modules. Accordingly, the current disclosure describes a client device 110 which is further described in relation to figure 3.

In this regard, the current disclosure describes a client device 400 configured to discover two or more access points (120, 130, 140, 150) in the industrial facility. The client device 400 comprises one or more network interfaces 410 configured to connect to the two or more access points (120, 130, 140, 150); and one or more processors 420 connected to the one or more network interfaces 410. The one or more processors are further connected to memory module 430 (or a non transitory storage medium 430) which comprise one or more instructions which when executed on the one or more processors 420, causes the one or more processors to receive a plurality of single user probe responses from the two or more access points (120, 130, 140, 150) over the two or more resource units of the frequency band associated with access point discovery, wherein each single user probe response is received over the resource unit associated with the corresponding access point; and discover the two or more access points (120, 130, 140, 150) based on the received plurality of single user probe responses from the two or more access points (120, 130, 140, 150), wherein each access point from the two or more access points (120, 130, 140, 150) is associated with a corresponding resource unit from the two or more resource units and wherein each resource unit is associated with one or more sub carriers in the frequency band.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein.

The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non-transitory storage medium claims.

## Claims

1. A method (200) for discovering two or more access points (120, 130, 140, 150) in an industrial facility, the method (200), by a client device (110), comprising:
a. receiving (210) a plurality of single user probe responses from the two or more access points (120, 130, 140, 150) over the two or more resource units of the frequency band associated with access point discovery, wherein each single user probe response is received over the resource unit associated with the corresponding access point; and
b. discovering (220) the two or more access points (120, 130, 140, 150) based on the received plurality of single user probe responses from the two or more access points (120, 130, 140, 150),
wherein each access point from the two or more access points (120, 130, 140, 150) is associated with a corresponding resource unit from the two or more resource units and wherein each resource unit is associated with one or more sub carriers in the frequency band.

2. The method (200) as claimed in claim 1, wherein the method (200) further comprises transmitting (210) a multi-user probe request to the two or more access points (120, 130, 140, 150).

3. The method (200) as claimed in claim 1, wherein each access point from the two or more access points is connected to an industrial network, the industrial network comprising a network management device for configuring with the two or more access points.

4. The method (200) as claimed in claim 1, wherein the two or more resource units includes a sequence of resource units.

5. The method (200) as claimed in claim 1, wherein each single user probe response from a corresponding access point comprises network parameters associated with the corresponding access points.

6. A client device (400) configured to discover two or more access points (120, 130, 140, 150) in an industrial facility, the client device (400) comprising:
a. One or more network interfaces (410) configured to connect to the two or more access points (120, 130, 140, 150); and
b. One or more processors (420) connected to the one or more network interfaces (410), the one or more processors (420) configured to:
i. receive a plurality of single user probe responses from the two or more access points (120, 130, 140, 150) over the two or more resource units of the frequency band associated with access point discovery, wherein each single user probe response is received over the resource unit associated with the corresponding access point; and
ii. discover the two or more access points (120, 130, 140, 150) based on the received plurality of single user probe responses from the two or more access points (120, 130, 140, 150),
wherein each access point from the two or more access points (120, 130, 140, 150) is associated with a corresponding resource unit from the two or more resource units and wherein each resource unit is associated with one or more sub carriers in the frequency band.

7. The client device (400) as claimed in claim 6, wherein the one or more processors (420) are further configured to transmit a multi-user probe request to the two or more access points (120, 130, 140, 150).

8. The client device (400) as claimed in claim 6, wherein each access point from the two or more access points (120, 130, 140, 150) is connected to an industrial network (160), the industrial network (160) comprising a network management device for configuring with the two or more access points (120, 130, 140, 150).

9. The client device (400) as claimed in claim 6, wherein the two or more resource units (120, 130, 140, 150) includes a sequence of resource units.

10. The client device (400) as claimed in claim 6, wherein each single user probe response from a corresponding access point comprises network parameters associated with the corresponding access point.

11. A non transitory storage medium (430) comprising a plurality of instructions, which when executed on one or more processors (420), cause the one or more processors (420) to:
a. receive a plurality of single user probe responses from the two or more access points (120, 130, 140,150) over the two or more resource units of the frequency band associated with access point discovery, wherein each single user probe response is received over the resource unit associated with the corresponding access point; and
b. discover the two or more access points (120, 130, 140, 150) based on the received plurality of single user probe responses from the two or more access points (120, 130, 140, 150),
wherein each access point from the two or more access points (120, 130, 140, 150) is associated with a corresponding resource unit from the two or more resource units and wherein each resource unit is associated with one or more sub carriers in the frequency band.
